# EUROPÄISCHE PATENTSCHRIFT

(11) **EP 3 844 526 B1**
(45) Veröffentlichungstag und Bekanntmachung des Hinweises auf die Patenterteilung: **29.03.2023**
(21) Anmeldenummer: 19716350.4
(22) Anmeldetag: 03.04.2019
(51) Int. Cl.: G01S 7/481, G02F 1/35

(54) **LIDAR MESSSYSTEM MIT WELLENLÄNGENUMWANDLUNG**
LIDAR MEASURING SYSTEM WITH WAVELENGTH CONVERSION
SYSTÈME DE MESURE LIDAR À CONVERSION DE LA LONGUEUR D'ONDE

(30) Priorität: 10.04.2018 DE 102018205381
(43) Veröffentlichungstag der Anmeldung: 07.07.2021
(73) Patentinhaber: Ibeo Automotive Systems GmbH, 22143 Hamburg (DE)
(72) Erfinder: HAKSPIEL, Stefan, 88074 Meckenbeuren (DE)
(74) Vertreter: RGTH
(86) Internationale Anmeldenummer: PCT/EP2019/058394
(87) Internationale Veröffentlichungsnummer: WO 2019/197242

(56) Entgegenhaltungen:
- WO-A1-2018/172115
- DE-A1-102008 005 129
- DE-A1-102015 106 635
- DE-A1-102017 121 346

## Beschreibung

Die Erfindung betrifft ein LIDAR Messsystem, gemäß dem Oberbegriff des Patentanspruchs 1.

Es sind LIDAR Messsysteme bekannt, die ein Emitterelement, ein Sensorelement sowie ein Optikelement aufweisen. Das Emitterelement sendet ein Laserlicht mit einer festen Wellenlänge aus. Dieses Laserlicht, zumeist in Form eines Laserpulses, kann an einem Objekt zumindest teilweise reflektiert und in Richtung dem Messsystem zurückleitet werden. Dieses reflektierte Licht trifft auf das Optikelement und wird durch dieses auf das Sensorelement geleitet. Das Sensorelement kann den eintreffenden Laserpuls detektieren und über die Laufzeit des Laserpulses auf einen Abstand des Objekts von dem LIDAR Messsystem schließen. Das Emitterelement sowie das Sensorelement sind zumeist auf unterschiedlichen Chips und auch das für Emitterelement und Sensorelement verwendete Material ist unterschiedlich. Bezüglich der Wellenlänge hat das Sensorelement aus diesem Grund den optimalen Detektionsbereich nicht in dem Sendebereich des Emitterelements. Beispielsweise liegt eine Wellenlänge des Emitterelements in Infraroten, wohingegen das Sensorelement eine optimale Detektion im sichtbaren Lichtspektrum bereitstellt. Eine Detektion in Infraroten ist zwar möglich, jedoch wird dadurch lediglich eine schlechte Effizienz bereitgestellt.

DE 10 2017 121 346 A1 offenbart ein Messsystem, das eine Sendereinheit mit zumindest einer individuell betreibbaren Leuchtdioden-Leuchteinheit mit einer Leuchtfläche aufweist.

DE 10 2008 005129 A1 betrifft einen Nichtlinear-optischen Frequenzkonverter mit einem ersten optisch parametrischen Oszillator.

WO 2018/172115 A1 offenbart eine Sensoranordnung umfassend eine Lichtquelle zur Aussendung von Licht einer ersten vorbestimmten Wellenlänge.

Es ist die Aufgabe ein LIDAR Messsystem bereitzustellen, welches die Verwendung von verschiedenen Materialien für Emitterelement und Sensorelement erlaubt und eine Verbesserung der Detektionseffizienz bereitstellt.

Diese Aufgabe wird durch ein LIDAR Messsystem gemäß dem Patentanspruch 1 gelöst. Die abhängigen Patentansprüche stellen vorteilhafte Ausgestaltungsvarianten des LIDAR Messsystems dar.

Das LIDAR Messsystem ist für ein Kraftfahrzeug geeignet. Insbesondere wird das LIDAR Messsystem statisch an dem Kraftfahrzeug verbaut und weist vorteilhafterweise selbst keine beweglichen Bauteile oder Baugruppen auf. Das LIDAR Messsystem umfasst ein Emitterelement, ein Sensorelement sowie ein Optikelement.

Das Emitterelement ist vorzugsweise auf einem Chip ausgebildet. Ebenso ist das Sensorelement vorzugsweise auf einem Chip ausgebildet. Das Emitterelement und das Sensorelement sind günstigerweise auf verschiedenen Chips ausgebildet. Als Emitterelement werden vorzugsweise VCSEL, vertical-cavity surface-emitting laser, verwendet. Das Sensorelement ist günstiger Weise als SPAD, Single Photon Avalanche Diode, ausgebildet.

Mit besonderem Vorteil sind die Emitterelemente an einer Sendereinheit ausgeführt, wohingegen die Sensorelemente an einer Empfangseinheit ausgeführt sind. Diese Einheiten umfassen unter anderem den jeweiligen Chip mit dem Emitterelement oder dem Sensorelement.

Günstiger Weise sind mehrere Emitterelemente sowie auch mehrere Sensorelemente pro Chip ausgebildet. Vorzugsweise ist ein Emitterelement einem Sensorelement zugeordnet. Das bedeutet, dass ein von einem bestimmten Emitterelement ausgesendeter und reflektierter Lichtpuls auf das zugeordnete Laserelement trifft. Mit besonderem Vorteil sind die Emitterelemente und Sensorelemente in einer Art Matrix angeordnet, insbesondere in Zeilen und spaltenförmiger Anordnung.

Das Emitterelement sendet zu Beginn einer Distanzmessung einen Laserpuls aus, der in einen bestimmten Raumwinkel abgestrahlt wird. Dieses Laserlicht, welches vorzugsweise als Lichtpuls ausgesendet wird, kann an einem Objekt, welches sich innerhalb des entsprechenden Raumwinkels aufhält, reflektiert werden und wird sodann zumindest teilweise zu dem LIDAR Messsystem zurückgestrahlt. An dem LIDAR Messsystem wird der reflektierte Anteil des Laserpulses von dem Sensorelement detektiert. Über die Laufzeit des Lichtpulses wird der Abstand des Objekts und damit seine Position ermittelt.

Das LIDAR Messsystem weist vorzugsweise ein oder mehrere Optikelemente auf. Diese Optikelemente werden von dem ausgehenden oder von dem eintreffenden Laserlicht durchlaufen. Ausgehend von dem Emitterelement wird das ausgesendete Licht durch das Optikelement in den dem Emitterelement zugehörigen Raumwinkel gelenkt. Dementsprechend wird das aus diesem Raumwinkel eintreffende Licht durch ein weiteres Optikelement auf das diesem Raumwinkel zugehörige Sensorelement gelenkt. Einem Emitterelement ist ein bestimmter Raumwinkel fest zugeordnet, ebenso ist einem Sensorelement ein bestimmter Raumwinkel zugeordnet, so dass ein von einem Emitterelement ausgestrahlter Laserpuls immer auf dasselbe Sensorelement trifft. Ein Sensorelement ist demnach einem Emitterelement zugeordnet. Beispielhaft kann ein Sensorelement auch durch eine Gruppe mehrere Sensorelemente ausgeführt sein.

Ein mit der Empfangseinheit zusammenwirkendes Optikelement wid auch als Empfangsoptik bezeichnet. Zudem ist die Empfangseinheit vorteilhafterweise durch eine Focal Plane Array Konfiguration ausgebildet. Bei einer solchen FPA sind die Sensorelemente der Empfangseinheit im Wesentlichen auf einer Ebene angeordnet. Diese Ebene bzw. die Sensorelemente des Chips sind sodann in einem Brennpunkt der Empfangsoptik angeordnet. Diese Focal Plane Array stellt eine statische Anordnung der Empfangseinheit bereit, sodass an dem LIDAR Messsystem keine beweglichen Bauteile ausgebildet sind.

Die Sendeeinheit ist ebenso vorteilhafterweise in einer FPA-Konfiguration ausgeführt. Hierbei gelten die Ausführungen zur Empfangseinheit identisch. Das der Sendeeinheit zugehörige Optikelement wird als Sendeoptik bezeichnet.

An dem LIDAR Messsystem ist zudem Elektronik ausgebildet, welche eine entsprechende Ansteuerung der Sensorelemente und der Emitterelemente bereitstellt und zudem zumindest ein Auslesen der Sensorelemente ermöglicht.

Insbesondere ist das LIDAR Messsystem über eine Verbindung mit weiteren Komponenten des Kraftfahrzeugs verbunden, um die ermittelten Daten zu übertragen. Der Abstand eines Objekts wird mithilfe von TCSPC, Time correlated single photon counting, ermittelt.

Das Emitterelement sendet bei einem Messzyklus ein Laserlicht mit einer ersten Wellenlänge aus. Nach der Reflektion an einem Objekt trifft dieses Laserlicht bei einem konventionelle LIDAR Messsystem unverändert auf das Sensorelement.

An dem verbesserten LIDAR Messsystem ist zusätzlich ein Wellenlängenkonverter ausgebildet, der die erste Wellenlänge des Laserlichts in eine zweite Wellenlänge umwandelt, so dass das Laserlicht mit zweiter Wellenlänge auf das Sensorelement trifft. Diese Änderung der Wellenlänge kann beispielsweise in einem nicht linear optischen Material geschehen.

Ein solcher Prozess kann beispielsweise durch Aufwärtsumwandlung, auch Photon Upconversion genannt, durchgeführt werden. Dabei nimmt der Wellenlängenkonverter eine Mehrzahl an langwelligen Photonen auf und emittiert diese anschließend als ein Photon mit kürzerer Wellenlänge. Es sind eine Vielzahl verschiedener Umwandlungsprozesse und zugehörige nichtlineare optische Materialien oder Materialkombinationen bekannt, die hierfür verwendet werden können, beispielsweise auch die Frequenzvervielfachung.

Wie bereits erwähnt liegt das von dem Emitterelement emittierte Laserlicht selten im optimalen Detektionsbereich des verwendeten Sensorelements. Durch die Wellenlängenkonversion kann die eintreffende Wellenlänge auf den optimalen Detektionsbereich des Sensorelements verschoben werden.

Bei einem Sensorelement aus Silizium länge dieser im sichtbaren Bereich. Die üblichen Laser, welche für LIDAR Anwendungen verwendet werden, emittieren aber zumeist im Infrarotbereich, bei dem Silizium ein schwache oder gar keine Detektionsvermögen mehr aufweist.

Beispielsweise kann für das Emitterelement ein Laserlicht einer ersten Wellenlänge verwendet werden, welches durch das Sensorelement überhaupt gar nicht mehr detektiert werden kann. Das Durchlaufen des Wellenlängenkonverters verschiebt die erste Wellenlänge in den optimalen Detektionsbereich des Sensorelements. Dies ist insofern von Vorteil, da eine ausgesendete Leistung des Laserlichts unter anderem von der Wellenlänge abhängt. Dies hängt auch mit der Augensicherheit zusammen.

Bei der Verwendung einer Wellenlänge von etwa 1.500 Nanometer kann die Sendeleistung um ein zehn bis zwanzigfaches größer gewählt werden, als beispielsweise bei 950 Nanometer Wellenlänge. Zwar weist der Wellenlängenkonverter in etwa eine Effizienz von 20 Prozent auf, dies führt aber dennoch zu einer Erhöhung der eintreffenden Leistung an dem Sensorelement um den Faktor 2 bis 4. Dadurch wird die Detektion von Objekten nochmals verbessert.

Für die Wellenlängenumwandlung kann beispielsweise Erbium dotiertes Natrium-Yttrium-Fluorid verwendet werden. Es gibt jedoch noch eine Vielzahl an weiteren Materialien, die sich für diese Aufwärtsumwandlung eignen.

Erfindungsgemäß wird vorgeschlagen, dass der Wellenlängenkonverter durch ein Wellenlängenkonverterelement innerhalb des empfangsseitigen Strahlengangs ausgebildet ist.

Das Wellenlängenkonverterelement kann als eigenes optisches Bauteil innerhalb des Strahlengangs des an dem LIDAR Messsystem eintreffenden Lichts ausgebildet sein. Der Strahlengang ist durch den Pfad definiert, dem das aus dem Raumwinkel eintreffende Licht bis zudem Sensorelement folgt. Das Wellenlängenkonverterelement kann beispielsweise durch eine Scheibe ausgebildet sein.

Günstiger Weise ist das Längenwellenkonverterelement zwischen dem Optikelement und dem Sensorelement oder bezüglich des eintreffenden Lichtstrahls vor dem Optikelement angeordnet.

Das eintreffende Laserlicht wird entweder oder nach dem Durchlaufen des Optikelements von der ersten Wellenlänge auf die zweite Wellenlängenwelle umgewandelt.

Erfindungsgemäß ist nach einer Ausführungsvariante der Wellenlängenkonverter als Beschichtung auf dem Optikelement aufgebracht ist.

Die Beschichtung kann dabei sensorelementseitig oder sensorelementfern auf dem Optikelement aufgetragen werden. Eine solche Beschichtung kann beispielsweise aufgedampft, aufgeklebt oder durch ein anderes Verfahren aufgebracht werden.

In einer weiteren erfindungsgemäßen Ausführungsvariante ist der Wellenlängenkonverter als Beschichtung auf dem Sensorelement oder auf dem Sensorchip aufgebracht.

Die Beschichtung kann dabei einzeln für jedes Sensorelement oder gemeinsam für den gesamten Sensorchip ausgeführt sein.

Ebenso können mehrere Wellenlängenkonverter verwendet werden, die vorzugsweise gemäß einer der vorigen Ausführungen ausgebildet sein können. Beispielsweise kann ein Optikelement beidseitig beschichtet sein.

Im Nachfolgenden wird das LIDAR Messsystem nochmals beispielshaft und ausführlich anhand mehrerer Figuren erläutert. Es zeigen:
Fig. 1 ein schematisch dargestelltes LIDAR Messsystem mit einer LIDAR Empfangseinheit und einer LIDAR Sendeeinheit;
Fig. 2 eine alternative Ausgestaltungsvariante des Empfangspfads aus Figur 1;
Fig. 3 eine alternative Ausgestaltungsvariante des Empfangspfads aus Figur 1;
Fig. 4 eine alternative Ausgestaltungsvariante des Empfangspfads aus Figur 1.

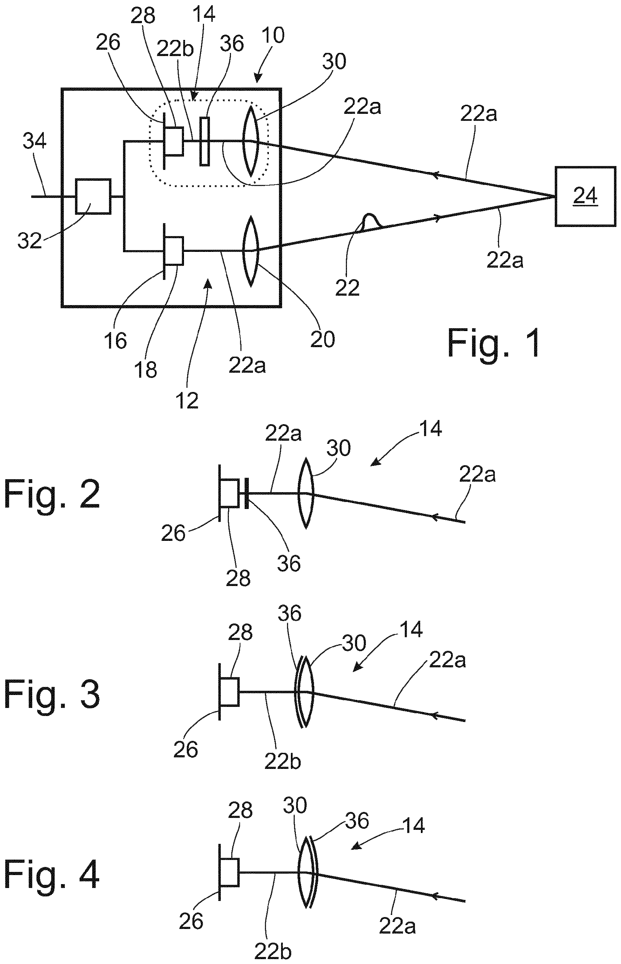

In der Figur 1 ist ein LIDAR Messsystem 10 dargestellt. Die Darstellung des LIDAR Messsystems 10 ist lediglich schematisch, reicht jedoch zur Erläuterung der Funktionsweise aus. Das LIDAR Messsystem 10 umfasst eine LIDAR Sendeeinheit 12 sowie eine LIDAR Empfangseinheit 14.

Die LIDAR Sendeeinheit weist einen Chip 16 auf, an dem ein Emitterelement 18 ausgebildet ist. Dieses Emitterelement 18 ist beispielhaft durch einen Laser ausgebildet. Dieser Laser kann beispielhaft durch einen VCSEL ausgebildet sein, vertical-cavity surface-emitting laser. In der Figur 1 ist lediglich eine einziges Emitterelement 18 dargestellt, wobei das LIDAR Messsystem 10 vorzugsweise eine Vielzahl an Emitterelementen 18 aufweist.

An dem LIDAR Messsystem 30 ist eine Sendeoptik 20 ausgebildet, die mit der LIDAR Sendeeinheit 12 zusammenwirkt. Durch diese Sendeoptik 20 kann ein von dem Emitterelement 18 ausgesendetes Laserlicht, vorzugsweise in Form eines Laserpulses 22 in eine definierte Raumrichtung gelenkt werden. Bei Verwendung mehrerer Emitterelemente 18 senden diese das Laserlicht über die Sendeoptik 20 in verschiedene Raumwinkel aus. Dabei können die Laserimpulse an einem Objekt 24 reflektiert werden und anschließend auf die LIDAR Empfangseinheit 14 treffen.

Die LIDAR Empfangseinheit 14 weist einen Chip 26 auf, an dem ein Sensorelement 28 ausgebildet ist. Das Sensorelement 28 ist beispielsweise durch eine SPAD ausgebildet, Single Photon Avalanche Diode. Dabei ist an dem LIDAR Messsystem eine Empfangsoptik 30 ausgebildet, die mit LIDAR Empfangseinheit 14 zusammenwirkt, wobei die Empfangsoptik das an dem Objekt 24 reflektierte Laserlicht auf das Sensorelement 28 lenkt.

Mit Vorteil weist der Chip 26 ebenso viele Sensorelemente auf, wie der Chip 16 Emitterelement 18. Zusammen mit der jeweiligen Optik 20, 30 ist ein bestimmtes Sensorelement 28 einem Emitterelement 18 zugewiesen, da diese über die Optiken 20, 30 denselben Raumwinkel betrachten. Mit besonderem Vorteil sind die Sendeoptik 20 und die Empfangsoptik 30 identisch ausgebildet. Ein Sensorelement 28 kann alternativ auch als Sensorelementgruppe ausgebildet sein, so dass eine Mehrzahl an Sensorelementen einem Emitterelement 18 zugewiesen sind.

Ein eintreffender Laserpuls 22 löst sodann das Sensorelement 28 aus, wobei die Entfernung des Objekts 24 aus der Laufzeit des Laserpulses 22 ermittelt wird. Die Bestimmung des Abstandes des Objekts 24 von dem LIDAR Messsystem 10 erfolgt vorzugsweise durch eine Elektronik 32. Die Elektronik 32 ist hierbei vereinfacht dargestellt und soll auch nicht weiter ausgeführt werden. Insbesondere wird zur Ermittlung des Abstandes des Objekts 24 von dem LIDAR Messsystem 10 ein TCSPC-Verfahren angewendet.

Bei Verwendung einer Mehrzahl von Emitterelementen 18 und Sensorelementen 28 sind diese vorzugsweise in einem Focal Plane Array, FPA, angeordnet.

Die Elektronik 32 wertet einerseits die Sensorelemente aus und kontrolliert andererseits den korrekten Ablauf eines Messzyklus des LIDAR Messsystems 10. Die Elektronik ist zudem über eine Verbindung 34 mit weiteren Komponenten eines Kraftfahrzeugs verbunden. Insbesondere kann das LIDAR Messsystem die Messdaten über die Verbindung 34 übertragen.

Innerhalb des Strahlenganges des eintreffenden, reflektierten Laserlichts in Form des Laserpulses 22 ist zudem ein Wellenlängenkonverter 36 angeordnet. Dieser Wellenlängenkonverter 36 ist aus einem Material ausgebildet, welches ein eintreffendes Licht erster Wellenlänge 22a in ein austretendes Licht zweiter Wellenlänge 22b umwandelt. Das von dem Emitterelement 18 ausgesendete Laserlicht 22 weist eine erste Wellenlänge 22a auf. Diese erste Wellenlänge 22a verbleibt während der Ausbreitung des Laserlichts unverändert. Trifft der Laserpuls 22 bzw. das Laserlicht auf den Wellenlängenkonverter 36, so ändert sich die erste Wellenlänge 22a in eine zweite Wellenlänge 22b, die von der ersten Wellenlänge 22a verschieden ist. Die erste Wellenlänge 22a ist an dem eingezeichneten Strahlengang beispielhaft durch das Bezugszeichen 22a verdeutlicht, wohingegen die zweite Wellenlänge mit 22b bezeichnet wird. Das Bezugszeichen stellt dementsprechend die Wellenlänge des Laserlichts 22 als Eigenschaft dar.

Gemäß der Figur 1 ist der Wellenlängenkonverter 36 als eigenes Element, insbesondere als Scheibe, innerhalb des Strahlengangs zwischen der Empfangsoptik 30 und dem Sensorelement 28 angeordnet. Das eintreffende Laserlicht passiert somit die Empfangsoptik 30, den Wellenlängenkonverter 36, wobei die erste Wellenlänge in die zweite Wellenlänge umgewandelt wird und sodann auf das Sensorelement 28 trifft.

Aufgrund des Wellenlängenkonverters 36 kann das Laserlicht mit langer Wellenlänge ausgesendet werden, so dass auch bei hohen Laserlichtleistungen keine Gefahr für das menschliche Auge besteht. Solche Wellenlängen liegen insbesondere im Infrarotbereich. Ein günstiges Material für Sensorelemente ist beispielsweise Silizium. Dessen optimaler Detektionsbereich liegt in sichtbarem Lichtspektrum. Durch die Verwendung des Wellenlängenkonverters 36 kann somit einerseits eine hohe Lichtleistung ausgestrahlt werden, wobei andererseits ein günstiges Detektormaterial bei seinem optimalen Detektionsbereich verwendet werden kann.

In der Figur 2 ist eine alternative Ausführungsvariante für den Empfangspfad des LIDAR Messsystems 30 gezeigt, welche in der Figur 1 durch ein punktierte Linie umrandet ist. Die LIDAR Empfangseinheit aus Figur 1 kann beispielsweise durch diejenige aus Figur 2 ersetzt werden. Im Unterschied zur Figur 1 ist der Wellenlängenkonverter 36 nicht durch ein eigenes optisches Element ausgebildet, sondern auf dem Sensorelement 28 in Form einer Beschichtung aufgebracht. Diese wandelt das eintreffende Laserlicht direkt vor dem Eintreffen auf das Sensorelement 28 um.

In der Figur 3 ist eine weitere Ausgestaltungsvariante zur Anordnung eines Wellenlängenkonverters 36 gezeigt. Anstatt das Sensorelemente 28 zu beschichten, ist eine entsprechende Beschichtung an der Empfangsoptik 30 aufgebracht. Dieser Wellenlängenkonverter 36 in Form einer Beschichtung hat denselben Effekt, wie die beiden vorherigen Ausführungsvarianten. Die Beschichtung ist dabei sensorelementseitig an der Empfangsoptik 30 aufgebracht.

Auch die Figur 4 zeigt eine ähnliche Ausgestaltungsvariante zur Figur 3. Hierbei ist der Wellenlängenkonverter 36 in Form einer Beschichtung an der sensorelementfernen Seite der Empfangsoptik 30 aufgebracht.

### Bezugszeichen

- 10: LIDAR Messsystem
- 12: LIDAR Sendeeinheit
- 14: LIDAR Empfangseinheit
- 16: Chip
- 18: Emitterelement
- 20: Sendeoptik
- 22: Laserlicht / Laserpuls
- 22a: erste Wellenlänge
- 22b: zweite Wellenlänge
- 24: Objekt
- 26: Chip
- 28: Sensorelement
- 30: Empfangsoptik
- 32: Elektronik
- 34: Verbindung
- 36: Wellenlängenkonverter

## Patentansprüche

1. LIDAR Messsystem (10),
- umfassend ein Emitterelement (18), ein Sensorelement (28) sowie ein Optikelement (30),
- wobei das Emitterelement (18) ein Laserlicht einer ersten Wellenlänge (22a) aussendet, welches nach einer Reflektion an einem Objekt (24), wieder auf das LIDAR Messsystem (10) trifft,
- wobei das eintreffende Laserlicht das Optikelement (30) durchläuft und auf das Sensorelement (28) trifft,
wobei an dem LIDAR Messsystem (10) ein Wellenlängenkonverter (36) ausgebildet ist, der die erste Wellenlänge (22a) des Laserlichts in eine zweite Wellenlänge (22b) umwandelt, sodass das Laserlicht mit zweiter Wellenlänge (22b) auf das Sensorelement (28) trifft,
**dadurch gekennzeichnet, dass** der Wellenlängenkonverter (36) durch ein Wellenlängenkonverterelement (36) innerhalb des empfangsseitigen Strahlengangs ausgebildet ist,
wobei der Wellenlängenkonverter (36) als Beschichtung auf das Optikelement (30) oder auf dem Sensorelement (28) oder auf einem Sensorchip (16) aufgebracht ist.

2. LIDAR Messsystem (10) nach Anspruch 1, **dadurch gekennzeichnet, dass** das Wellenlängenkonverterelement (36) zwischen Optikelement (30) und Sensorelement (28) oder bezüglich des eintreffenden Laserlichts vor dem Optikelement (30) angeordnet ist.

## Claims

1. LIDAR measuring system (10),
- comprising an emitter element (18), a sensor element (28) as well as an optical element (30),
- wherein the emitter element (18) emits a laser light of a first wavelength (22a), which, after reflection at an object (24), impinges again on the LIDAR measuring system (10),
- wherein the incoming laser light passes through the optical element (30) and impinges on the sensor element (28),
wherein a wavelength converter (36) is formed on the LIDAR measuring system (10), which converts the first wavelength (22a) of the laser light into a second wavelength (22b), so that the laser light impinges on the sensor element (28) with the second wavelength (22b),
**characterized in that** the wavelength converter (36) is formed by a wavelength converter element (36) within beam path on the receiving side,
wherein the wavelength converter (36) is applied as a coating onto the optical element (30) or on the sensor element (28) or on a sensor chip (16).

2. LIDAR measuring system (10) according to claim 1, **characterized in that** the wavelength converter element (36) is arranged between the optical element (30) and the sensor element (28) or in front of the optical element (30) with respect to the incoming laser light.

## Revendications

1. Système de mesure à LIDAR (10),
- comprenant un élément émetteur (18), un élément de détection (28) ainsi qu'un élément optique (30),
- sachant que l'élément émetteur (18) émet une lumière laser d'une première longueur d'onde (22a), lequel après une réflexion sur un objet (24) frappe à nouveau le système de mesure à LIDAR (10),
- sachant que la lumière de laser incidente traverse l'élément optique (30) et frappe l'élément de détection (28),
sachant qu'un convertisseur de longueur d'ondes (36) est constitué sur le système de mesure à LIDAR (10), qui transforme la première longueur d'ondes (22a) de la lumière de laser en une deuxième longueur d'ondes (22b) de telle manière que la lumière de laser avec une deuxième longueur d'ondes (22b) frappe l'élément de détection (28),
**caractérisé en ce que** le convertisseur de longueur d'ondes (36) est constitué par un élément de convertisseur de longueur d'ondes (36) à l'intérieur de la trajectoire de faisceau du côté réception,
sachant que le convertisseur de longueur d'ondes (36) est disposé en tant que revêtement sur l'élément optique (30) ou sur l'élément de détection (28) ou sur une puce de détection (16).

2. Système de mesure à LIDAR (10) selon la revendication 1, **caractérisé en ce que** l'élément de convertisseur de longueur d'ondes (36) est disposé entre l'élément optique (30) et l'élément de détection (28) ou devant l'élément optique (30) par rapport à la lumière de laser incidente.
